# EUROPEAN PATENT SPECIFICATION

(11) **EP 3 047 728 B1**
(45) Date of publication and mention of the grant of the patent: **22.05.2019**
(21) Application number: 16152081.2
(22) Date of filing: 20.01.2016
(51) Int. Cl.: A01K 5/02

(54) **A FEEDER, ITS PROGRAMMING AND USE FOR FEEDING PIGLET, AND A METHOD OF FEEDING ANIMALS**
FÜTTERER, DESSEN PROGRAMMIERUNG UND VERWENDUNG ZUM FÜTTERN VON FERKELN, UND EIN VERFAHREN ZUR FÜTTERUNG VON TIEREN
DISPOSITIF D'ALIMENTATION, SA PROGRAMMATION ET SON UTILISATION POUR L'ALIMENTATION DE PORCELETS ET PROCÉDÉ D'ALIMENTATION DES ANIMAUX

(30) Priority: 20.01.2015 DK 201570028
(43) Date of publication of application: 27.07.2016
(73) Proprietor: Unitron A/S, 6000 Kolding (DK)
(72) Inventor: NIELSEN, Ib Amstrup, 7100 Vejle (DK); RØNNE, Ove, 8520 Lystrup (DK)
(74) Representative: Nielsen, Leif

(56) References cited:
- EP-A2- 1 260 136
- US-A- 4 640 229
- US-A- 5 299 529

## Description

### FIELD OF THE INVENTION

The present invention relates to a feeder for periodic dispensing of dry-feed to animals, especially piglet, where the dosing is done automatically according to a pre-programmed dosing-sequence. The invention also relates to use and programming of such a feeder and a method of feeding animals, especially piglets.

### BACKGROUND OF THE INVENTION

For facilitating work in connection with dispensing feed to animals and in order to ensure an exact feeding, typically, automated feeding systems are used. German patent document DE3738156 discloses a number of feeders with a screw conveyor in the bottom of the feeders for dispensing feed. The screw conveyor of each feeder is driven by an actuator which by cable is connected to a control at a distance to the feeder. Each of the control units is electrically connected to a respective actuator and collectively electronically connected to a common central computer for controlling different feeders. This has the advantage that the feeding by a feeder can be carefully adapted to the individual animals or groups of animals.

Programming of the dispensing of the feed, however, requires knowledge of the handling of computer programs, which for some farmers and staff in agriculture is a difficult task. Therefore, it would be desirable to have a method and an apparatus that, on the one hand, retains the possibilities offered by central control of feed sequences, but which makes it easier for the farmer or the staff to adjust the feeding sequences to the actual needs.

There exist different feed systems, which are programmed at the point of use, for example as described in patents EP1260136 by Lely Research Holding AG, GB2278035 by Tae Lim Electronics Co., GB2214329 by Tien-Yung, US2013/0098298 by Manickchan, and US5433171 by Ewell. All devices in these publications have complex keypads with numerous options for programming that requires extensive knowledge of the many features of the device. It would be desirable to have an easier way to program feed systems. Other prior art feeding systems are known from US5299529A.

When rearing piglets suckle on the sow but cannot get enough milk, there is a need for feed supplement for the piglets. This feed supplement has a high nutritional value, why it is relatively expensive, so that farmers have a high interest in minimizing waste. Typically, however, there are some losses by the current form of feed supply, which is partly due to the fact that precise feeding and weighing of the feed is labor intensive and, accordingly, implies high labor costs, why there is a tendency to compromise accurate delivery. It would therefore also desirable to provide improvement in this respect

### DESCRIPTION / SUMMARY OF THE INVENTION

It is an objective of the invention to provide an improved apparatus and an improved method of adjusting the automatic feed sequences in a simple manner. This objective is achieved with a feeder according to claim 1, its use according to claim 14, and a method according to claim 8 or claim 10, as described in the following.

The feeder is programmed for periodic dispensing of dry-feed for animals. The tenn dry-feed includes pelleted or granulated feed and feed in powdered form; and the term dry-feed is also used here for vitamin supplements, which, for example, are provided for piglets as powder in their first 8-10 days of life before supply of regular dry-feed.

The feeder comprises a feed container for accommodating the dry-feed and comprises a mechanical dosing device, for example a conveyor screw, which when activated is configured for dispensing dry-feed from the feed container to a feed outlet, for example a spout, which ends at a feeding location, accessible to one or a plurality of animals. The feeder also includes a control module with a microprocessor that is digitally connected to a digital data memory. The control unit, for example provided at or on the feed container, is functionally connected to the dosing device for periodic activation and de-activation of it in order to dispense predetermined portions of the dry-feed according to a preprogrammed dosing-sequence stored in the digital data memory and executed by the microprocessor.

For example, the dry-feed is dispensed several times daily to the animals, for example pigs, sows, poultry, horses, cattle, mink or fish. The feeder is universal and can be used for many different animals. For example, the feeder is used to feed special rations to calves, lambs or other young animals or to give fish vitamin and mineral supplements. Special attention is given its use for the rearing of piglets, which is described in greater detail below by way of example. However, as the invention is of general nature, the use of the feeder or method is not limited to piglets, only.

The dosing-sequence follows a predetermined dosing-curve, also called the feeding curve, over a period, for example a period of several days, weeks or months, with dosing amounts that vary in dependence of the moment of dispense within this period. The dosing-curve can be represented by a curve in a coordinate system having a first axis with an abscissa representing time, for example number of days from a start date, and a second axis with an ordinate representing the amount of food per feeding, for example feed weight or feed volume; or the ordinate is given by an arbitrary scaling factor. The shape of a specific dosing-curve is fixed but the dosing-curve can be shifted vertically in the coordinate system in dependence on the number of pigs or other animals in the pen or other factors that require increasing or decreasing the feed per feeding.

Special interest in this connection has a period of several weeks where young animals, especially piglets, receive feed supplement automatically according to a pre-programmed dosing-sequence in which the feed dispensing increases along with their relatively rapid growth while they also suckle on the mother animal, for example the sow. As a sow, typically, does not have enough milk or teats for all piglets, the smallest piglets will have a tendency to be pushed away by the larger piglets. The feed supplement safeguards that they also have a chance to survive and grow. However, in order to minimize or entirely prevent waste, the dosing-curve is precisely adjusted to their need for feed supplement, which also is dispensed according to a timing pattern corresponding to the periodic release of milk from the sow. For example, feed is dispensed every two hours. This is important, as the piglets that do not come to a teat by the sow, thus, may eat at the same time as the other piglets.

The control module includes a display and a keypad in electronic connection with the microprocessor. By the keypad, programming of the microprocessor can be performed, and the display provides a status message or a feedback when programming. It is known to program a computer for controlling the feed installations with regard to the dosing. However, in order to facilitate the task of programming and to meet the farmers or the staff who do not have the expertise or motivation to undertake conventional and relatively complex programming in a typical computer-controlled feeding installation, there is hereinafter provided an improvement by simplifying the programming to very few required steps that are intuitively clear and easy to understand and carry out, particularly in relation to rearing of piglets but also in relation to rearing of other animals.

The keypad comprises a pushbutton or tilt-switch for programming the microprocessor such that only a single press on the pushbutton or a simple tilt of the tilt-switch results in a programming of the microprocessor to increase the dosing amount for the predetermined dosing-curve by a predetermined value, for example a relative percentage of a basic value, without changing the general trajectory of the dosing-curve. The result of the press of such a pushbutton or tilt of the tilt-switch can be understood as a vertical shift of the entire dosing-curve in the coordinate system to a higher dosing amount. Accordingly, several presses will result in several of such shifts of the dosing-curve. Similarly, there is provided a pushbutton or tilt-switch, either the same or another pushbutton, such that only a single press on the pushbutton or a simple tilt of the tilt-switch results in a programming of the microprocessor to decrease the dosing amount for the predetermined dosing-curve by a predetermined value without changing the general trajectory of the dosing-curve. The result of the press of such a second pushbutton or tilt of the tilt-switch can then be understood accordingly as a step-wise displacement of the entire dosing-curve towards a lower dosing amount. For example, multiple presses or tilts lead to multiple displacements of the dosing-curve.

An example of an embodiment in which the same pushbutton is used to increase or decrease the dosing amount comprises a tilt-switch in addition to the pushbutton, wherein the tilt-switch is in a first orientation for increasing the dosing amount, for example, an upward orientation of the tilt-switch, and in a second orientation for decreasing the amount, for example, a downward orientation, and where a single press of one pushbutton increases or decreases, respectively, the dosing amount, depending on the orientation of the tilt-switch.

Another example of an embodiment in which the same pushbutton is used to increase or decrease the dosing amount comprises pushbutton in which a short press shifts the dosing-curve towards a higher dosing amount and a long press shifts the dosing-curve towards a lower dosing amount.

In another embodiment, there are provided only two buttons on the keypad or even only a single tilt-switch, by which the service personnel or the farmer can increase or decrease the feed supply by a predetermined factor or a predetermined relative amount relatively to a normal value.

For example, a simple press of a pushbutton, for example a pushbutton with an upward arrow, in the keypad implies that the curve's values are increased by a certain percentage, while pressing another pushbutton, for example a pushbutton with a downward arrow, in the keypad implies a reduction of the curve's values by a certain percentage.

For example, the percentage is 5% or 10% of the curve's basic values. For example, three presses on an upward arrow imply an increase by 3 times 10% to 130% of the curve's basic values. Similarly, farmers can reduce the increased feed supply again by three presses on a downward arrow, which reduces the curve by 3 times 10% of the curve basic values. In this way, an extremely simple and intuitive programming of the microprocessor is achieved.

Similarly, an upward or downward tilt of a tilt-switch can result in increase, respectively, decrease of the feed supply.

Such increase or decrease of the dosing amount without changing the general trajectory of the dosing-curve is, optionally, related to predetermined levels of the dosing-curve. For example, a change towards high or lower dosing amounts shifts the curve between predetermined levels but keep the general shape of the curve.

For example, a single pushbutton is used to increase or decrease the feed supply by a predetermined factor, or a predetermined relative amount from a normal value. For example, by repeating the press on the single pushbutton, the feed can be increased by vertical shift of the dosing-curve in a number of levels, for example level 0 to 9, in a cyclic manner. This means that the levels are increased step-wise by repeated presses until a maximum value, for example level 9, after which a further press leads to a shift of the curve to a minimum value, for example level 0, after which further repeated presses increase the level of the curve again.

For example, at startup prior to adjustment by the pushbutton, a base curve has level 5 with the possibility of increasing or decreasing the level, as needed.

Such an increase or decrease of the feed supply may be needed if the number of piglets in a pen increases or decreases or if the piglets have diarrhea, or there break out other diseases in the pen.

However, there is also the possibility that there are provided other keys on the keypad for other functions. For example, the two pushbuttons are arranged such that simultaneous pressing of both pushbuttons deletes a performed programming in order to return to the original programming. Alternatively, the same two pushbuttons are used for selecting functions in a function menu, for example, to select among other curve trajectories.

For example, in order to keep the operation simple, there are provided two pushbuttons with an indicator, such as an upward or downward arrow, for respectively increasing or decreasing the feed supply with a specific value, while other buttons in their appearance clearly differ from the two pushbuttons with the indicators. In some embodiments, there is provided a keypad with only two buttons, which simplifies the feeding process for the user.

The display is in this case arranged to indicate this increase or decrease. In the simplest form, the display is only used for indicating a level of the dosing-curve. Alternatively, the display indicates also the current feeding-day on the curve, where the curve starts at day-number 1 and continues until a maximum day-number, for example 21, 28 or 35 days.

In case other functions than solely increase or decrease of the feed supply are provided, the display can also specify these other functions. For example, there is provided a third pushbutton or tilt-switch for switching between functions, where one of the features is a choice between several preset dosing-curves with different shapes. It gives the farmer or the staff the opportunity to choose among a variety of dosing-curves in the microprocessor and the option to choose the level of feed supply.

In certain embodiments, a selection can be made between the different dosing-curves only by using the two pushbuttons or the tilt-switch. For example, a long press causes switching between dosing-curves, while a short press causes an step-wise level change of the dosing-curve and thereby increases respectively decreases the feed supply.

In certain embodiments, the keypad is adapted to only being able to be used to adjust the level of a dosing-curve up and down. In other embodiments, it is also possible on the keypad to select a particular among multiple dosing-curve trajectories. Optionally, there is no possibility of other functions on the keypad. This makes operation very simple.

For example, a pushbutton is used to select the start day-number on the curve. As the feeder shall not necessarily start with day-number 1 on the dosing-curve, it is advantageous to be able to choose the day-number at which the feed curve should start or continue. For example, a new feeder that is to be used in a pen of piglets that are 10 days of age, the curve should not start from the beginning but begin at the curve's tenth day. For example, the feeder is provided with a second button, for example the second of two buttons, which is used to adjust the day-number of the curve. In some embodiments, the feeder comprises only two pushbuttons or tilt-switches, one of which relates to the vertical shift of the curve and the other to the selection of the day-number in the feeding curve. In this case, the pushbuttons are, respectively, configured for stepwise increasing/decreasing the level of the curve and the day-number on the curve. Selecting a curve level and a day-number takes place in a cyclic manner during repeated pressing, such that a numerical sequence, for example from 0 to 9 for the curve level and from 1 to 28 or 1 to 35 for the day-number, starts again when the minimum or maximum level is reached, depending on whether a press increases or decreases the curve level curve or day-number.

In other embodiments, the control module also comprises a wireless transmitter in electronic connection to the microprocessor and configured for receiving the dosing-sequence as digital data from a computer. The microprocessor is configured for storing the received dosing-sequence in the data memory. For example, a dosing-curve is transferred wirelessly in the form of a dosing-sequence from a central computer or another computer, for example a smartphone, to the control module. This has the advantage that the control module, on the one hand, has the same variety of options for programming as known devices but also implies an extremely simple way for quick and easy adaptation of the stored dosing-sequence or dosing-sequences using the very simple and intuitive keypad.

In order for the keypad being intuitively understood by the staff or the farmer as belonging to a particular feeder, among many other feeders, the display and keypad are advantageously located at or on the feed container or in the immediate vicinity, for example, at a distance of less than three meters from the feed container. It is then advantageous if the feed container is visible from the display and the keypad.

The control module comprises an outer shell which houses the display and the keypad and is disposed at or on an outer side of the feed container. In this case, there is no doubt about the feeder for which the keypad is used. It should be noted that the systems typically used for programming prior art feeder systems require precision during programming with respect to naming the various feeder devices and their position in the stable. The risk of faults in the programming is significantly reduced by the described feeder.

In certain embodiments, the outer shell also houses the microprocessor, data memory, and an actuator that is mechanically connected to the dosing device, for example a conveyor screw, and wherein the actuator is functionally connected to the microprocessor. The microprocessor is then arranged to start and stop the actuator according to the dosing-program stored in the data memory.

For example, the dosing device is a conveyor screw provided in the feed container, one end of the conveyor screw being mechanically connected to the actuator in the outer shell and the opposite end of the conveyor screw being provided at a feed outlet, for example connected to the feed outlet.

In some cases, particularly when using powdered dry food, also called middlings, a stirring element in the feed container is advantageous for stirring the dry-feed, so as to prevent clogging. For example, the stirring element is also driven by the actuator. In certain embodiments, the stirring element comprises a wheel with shovels or pegs, for instance resilient pegs, that during rotation of the wheel shovel through the dry-feed. Advantageously, the stirring element, for example the wheel, may be provided removably so that it can be installed or removed from the feed container according to the type of dry-feed.

For example, the stirring element comprises a sprocket wheel having teeth engaged with the screw conveyor for rotation of the sprocket by rotation of the screw conveyor, wherein an arm, for example a flexible arm, is fastened to the sprocket for by rotation of the sprocket to shovel through the dry-feed. For example, there is fastened only one arm. Alternatively, there are fastened two, three or more arms to the sprocket
As a control for sufficient feed in the feed container, it advantageously contains an infrared sensor which is electronically connected to an alarm device that sends an alarm signal if the contents of the feed container drops below a predetermined level. For example, an alarm is given as an audio signal or a visual signal or both. Optionally, the infrared sensor is connected to the microprocessor. In some embodiments, the alarm is transmitted to a central computer and/or to a smartphone, where the responsible person can read the alarm and take the necessary steps for refilling the dry-feed in the feed container.

The feeder is of a general nature and the volume of the feed container can vary. In some embodiments, in particular for feed supplementing of piglets, the feed container has a volume of between 1 and 10 liters. In such cases, the feed containers are relatively small. However, the feeder principle is of general character and can be dimensioned as needed and according to the specific use. Also, in case that the sow must have a feed supplement with high vitamin content, there is only needed a relatively small feed container.

In some embodiments, the control module contains one or more batteries, which drive the actuator and provide electric power to the electronics, particularly the microprocessor and data memory. This means that there is no necessity for other power sources, especially a power supply by cables. This makes installation easy and flexible. The battery or batteries are housed within the outer shell with the actuator and the electronic components. This technical solution is particularly applicable for relatively small versions of the feeder.

For rearing of piglets, it is important that all piglets receive feed. Typically, it is the largest of the piglets that pushes the smaller away from the sow's teats. The smaller piglets therefore need very good feed, which is relatively expensive, and a minimizing of waste is important, as already described above. However, there is also the other above-mentioned aspect that must be met, which is a correct feed supply with a proper distribution of the feed to the smaller piglets. It is thus important that the feed supply happens to the weak piglets when the sow gives the piglets the possibility to suckle.

Otherwise, if feed supplement is given while there is no chance to suckle, the strongest piglets will also push the smaller away from the feed supplement, which means that the smallest piglets will neither get milk from the sow nor feed supplement from the feeder. Thus, the feed dispense must be adjusted so that it occurs simultaneously with the periods when the sow lies down to give milk. This means in practice that a feed-sequence must match the daily rhythm and also be in agreement with the increased need for supplements by the piglets during the first several weeks long period of growth.

It should be noted in this context that the feed supplement, during the period in which there normally is being suckled, has the advantage that it accustoms the piglets to solid food. This prevents weight loss by the piglets in a transition phase.

Possible sequences that follow the increased need for feeding during growth is an aspect of the dosing-curve that is discussed in the following with some examples, where the period is divided into a first part of the period, hereinafter exemplified as a first sub-period or a first phase and a second part of the period, hereinafter exemplified as a second sub-period, or second phase. The term sub-period and phase will, typically, not be identical and, typically, not have the same lengths.

For example, the dosing-curve has a shape which is convex (upwards hollow) in a first sub-period and concave (downwards hollow) in the second sub-period of the dosing-sequence. The first sub-period is typically between 25% and 75% of the entire period, for example between 50% and 70%.That implies in practice that the increase of feed rises during the first sub-period and is reduced again in the second sub-period. This way, the curve develops from a fairly flat form to a steeper curve before deflecting again towards a more flat form.

For example, the amount of daily dispensed dry-feed from the feeder according to the dosing-sequence increases in a first phase of the period with a first increase and in a second phase of the period with a second increase, wherein the second gain is significantly larger than the first increase, for example, at least two or at least three times as high as the first increase. For example, the two phases are equally long or approximately equally long and divide the period into two halves.

In some embodiments, the dosing-curve is defined by a first approximately linear increase in a first phase and a subsequent second approximately linear increase in a second phase, wherein the second increase is significantly higher than the first increase. For example, the slope of the approximate linear trajectory in the second phase is several times larger than in the first phase. In some cases, it is at least twice as large, for example at least 3 times as large or at least 5 times as large, or at least 8 times as large.

For example, the first phase extends over the first 9-13 days of the period where regular feed is supplied. The second phase extends over the rest of the period in which regular feed is supplied, for example over equally long time as the first phase. In combination, it is thus possible to have a simplified feeding curve in the two successive phases of the period, which is following substantially linear trajectories, where the linear trajectory in the second phase, however, has a significantly higher slope.

The invention comprises the following method for automatically feeding animals, especially piglets, with a feeder according to claim 1, that comprises a control module, a feed container and a mechanical dosing device for dispensing dosed volumes of dry-feed from the feed container.

The method then comprises programming the microprocessor in the control module for successive dosing of varying amounts of dry food over a period, of several weeks, or even months, and the dispensing thereof from the feeder. This programming comprises storing these varying amounts of dry food as a dosing-sequence in a digital data memory that is electronically connected to the microprocessor, wherein the microprocessor is functionally connected to the mechanical dosing device and controls this by activation and de-activation for dispensing dry food according to the dosing-sequence.

Referring to the previously mentioned dosing-curves, the period is divided into a first sub-period for feeding and in continuation thereof a second sub-period for feeding, which together constitute the period. Alternatively, the period is divided, as described above, into two phases, wherein the dosing-curve for feeding in each of the phases follows an approximately linear trajectory, however, in the second phase the linear trajectory being significantly steeper.

As described, this method is especially useful for feeding during breeding of piglets. Advantageously, the daily amounts in the dosing-sequence are divided into 8-12 portions dispensed between intervals of two to three hours in order to follow a pattern of a sow's milk delivery to piglets.

For example, vitamins in powder form are provided to newborn piglets in the first 9 days after birth, which is not yet regular feed supply, as the actual feed supply starts on the tenth day after birth. The above-described dosing-curve trajectory concerns the regular feed supply in this case.

It is pointed out that the term "dosing-curve" should be understood as a general and broad illustrative term, including non-continuous curves, also including histograms as an example of a non-continuous curve.

### SHORT DESCRIPTION OF THE DRAWINGS

The invention is described in more detail with reference to the drawing in which
FIG. 1 shows a Feeder a) in an exploded illustration, b) from above, c) in sectional view;
FIG. 2 shows a feeder in another exploded illustration;
FIG. 3 shows a feeder in a perspective drawing;
FIG. 4 shows photographs of a) the feeder outlet, b) the feeder's sprocket for preventing clogging of the dry food, c) the sprocket in enlarged view and the conveyor screw at the bottom, as well as d) the teeth of the sprocket;
FIG. 5 shows an alternative feeder in a) an exploded view, b) is a perspective view from above and c) a perspective view from the side;
FIG. 6 shows an example of a trajectory of a dosing-curve for the rearing of piglets that in the same period suckle on the sow;
FIG. 7 shows an example of a different trajectory of a dosing-curve for the rearing of piglets that in the same period suckle on the sow.

### DETAILED DESCRIPTION / PREFERRED EMBODIMENT

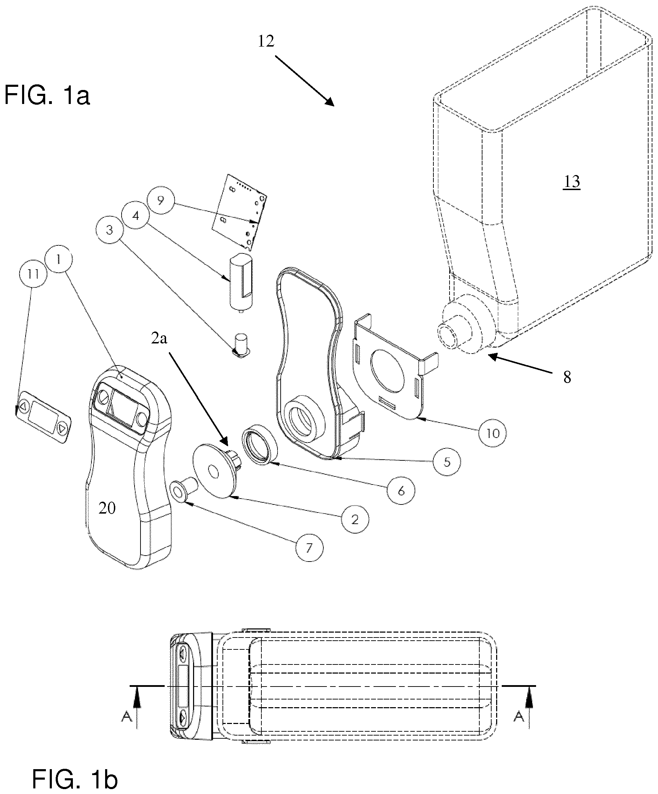

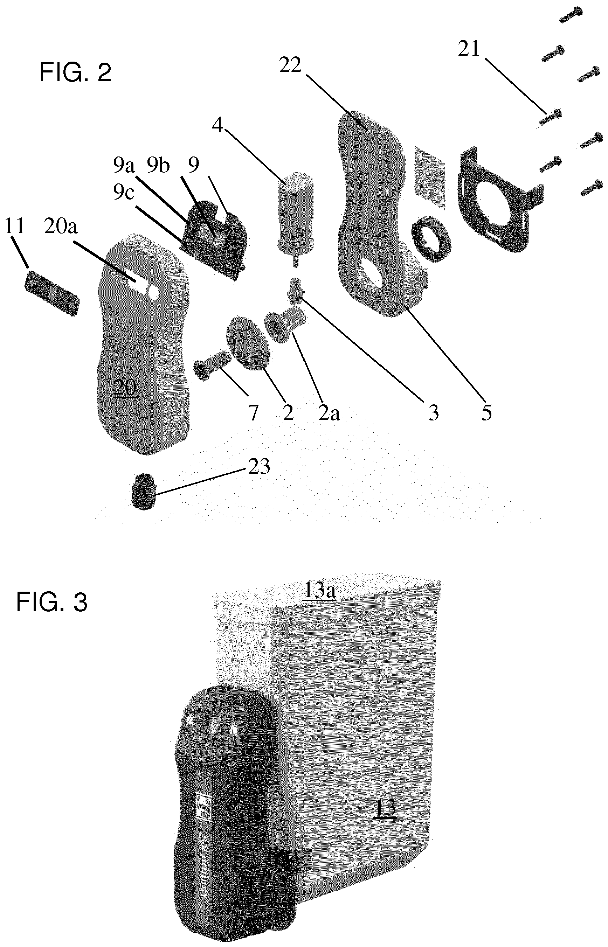

FIG. 1a shows a feeder 12 in an exploded illustration, which essentially comprises a feed container 13 and a control module 1. The feed container 13 is open upwards for filling the dry-feed for animals, for example granular animal feed, into the feed container 13. The opening can be covered by a lid 13a, as shown in FIG. 3. At the bottom of the feed container 13, there is provided a screw conveyor for controlled dispensing of the feed for feeding animals, such as pigs, sows, poultry, horses, cattle, mink and fish.

The feed container 13 has a rectangular horizontal cross-section with three vertical walls and a fourth wall having a vertically extending top and a slight inclination towards the lower part, where the wall is again vertically and wherein it is possible to connect a drive shaft to the conveyor screw. Onto this fourth wall, the control module 1 is fastened.

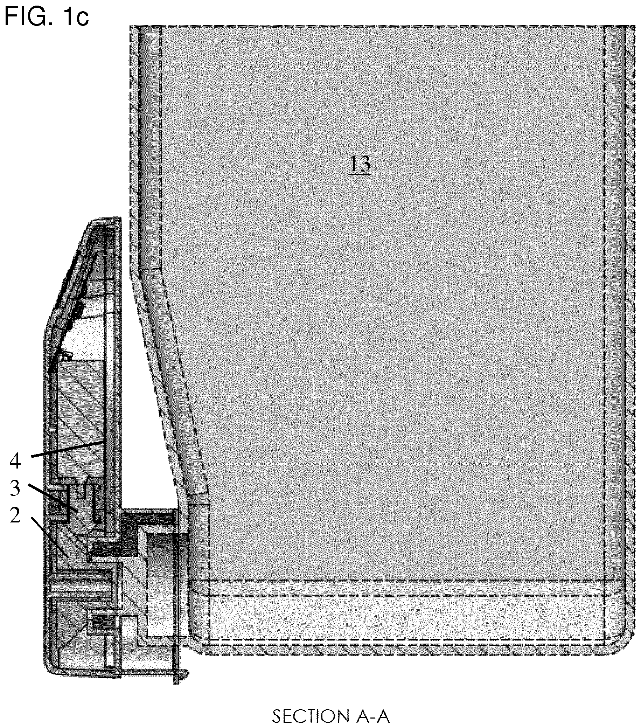

The screw conveyor, which is not shown in Fig. 1a, is seated in a pilot bearing 8 and connected to a first bevel gear 2 via a connection 2a, as shown in FIG. 2. The first bevel gear wheel 2 is horizontally journaled and driven by an actuator 4 via a second bevel gear wheel 3, which is vertically journaled. The first bevel gear wheel 2 is rotationally supported by a plain bearing 7. The interaction between the first bevel gear wheel 2 and the second bevel gear wheel 3 is better visible in FIG. 1c, which is a cross-sectional view with a section as illustrated in FIG. 1b.

A gasket 6, as illustrated in FIG. 1a, ensures smooth running of the conveyor screw and the first bevel gear wheel 2. The plain bearing 7, the first bevel gear wheel 2, the second bevel gear wheel 3 and the rotary-actuator 4 are housed inside the control module's outer shell 20 which is closed by a rear panel 5. An example of a method of assembly for the outer shell 20 and rear panel 5 is illustrated in FIG. 2, where the rear panel 5 includes holes 22 for bolts 21, which by engagement in the outer shell 20 holds the rear panel 5. When assembled, as illustrated in FIG. 3, the control module 1 is fixed to the feed container 13 by means of a bracket 10.

As shown most clearly in FIG. 2, there are provided apertures 20a in the outer shell 20 for a keypad 9a and a display 9b.These apertures 20a are covered by a keypad foil 11 on the outside of the outer shell 20, which gives simple information for the use of the pushbuttons, for example, an upward arrow and a downward arrow as illustrated in FIG. 2. On the opposite side of these apertures 20a, there is provided a control unit 9. This control unit 9 includes a printed circuit board with electronic components 9c, such as digital data memory and microprocessor, and also a keypad 9a and a display 9b. In the data memory, there are stored programs for dispensing of the granular feed. For example, the program comprises a sequence for the dispensing several daily servings. These servings may be equally large or vary. For animal rearing, it is necessary to increase the amount of feed along with the growing over a longer period of several weeks or even months. Curve trajectories for the dispensing of the feed over a period of several weeks are stored. A periodic feeding is carried out during the day, and the total daily amount of feed is increased over a period of weeks along with the weight gain of the piglets.

In certain embodiments, the keypad 9a is used to manually select a dosing-curve among several differently shaped dosing-curves. The keypad 9a is used to manually increase or decrease the amount that is dispensed according to the dosing-curve. For example, if it is found that the programmed dosing-curve does not lead to a sufficient discharge of feed, the farmer can, by means of the keypad, increase the discharge of feed in a way such that the overall shape of the dosing-curve is maintained but the curve's values for the dispensing are multiplied by a given factor. For example, a press on the keypad on an upwards arrow implies that the dosing-curve's values are increased by a certain percentage, while a press on the keypad on a downwards arrow implies the reduction of the dosing-curve's values by a certain percentage. This corresponds to a vertical parallel shift of the dosing-curve towards a higher or lower dose. For example, the increase or decrease by a certain percentage is a fraction of some fixed basic values. For example, the percentage is 5% or 10% of the curve's basic values. For example, this implies that three presses on an upwards arrow means a 3 times 10% increase to 130% of the curve's basic values. Correspondingly, the farmer can reduce the increased feed supply again by three presses a downwards arrow, which reduces the curve with 3 times 10% of the curve basic values.

Other keys on the keypad or other choices of points in a function menu can be used to select among other curve trajectories. As a replacement of the two pushbuttons, there may be provided a tilt-switch in which a tilt up or down causes an increase respectively decrease of the dosing.

Such curve trajectories in the data memory can be stored from the factory or added later. For example, such curve trajectories can be added wirelessly from a computer, for example, a PC, laptop, tablet PC or smartphone.

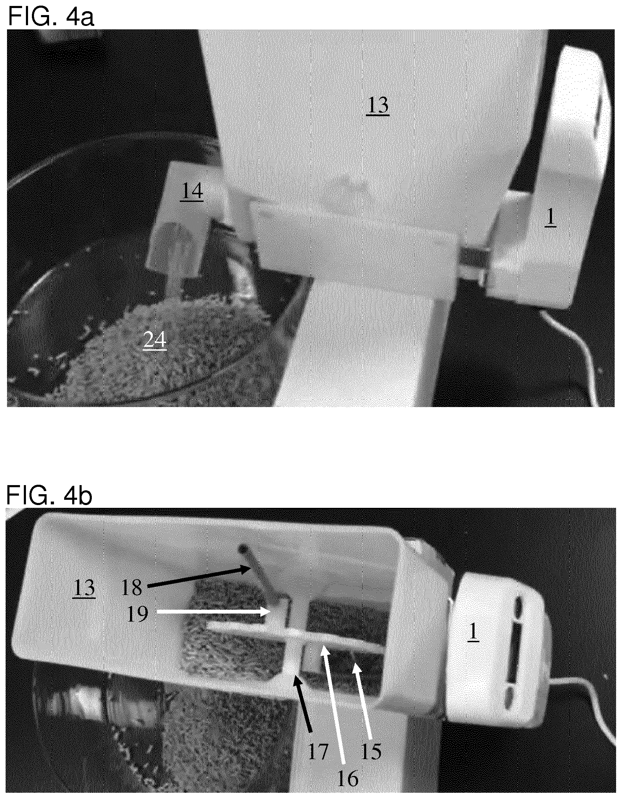

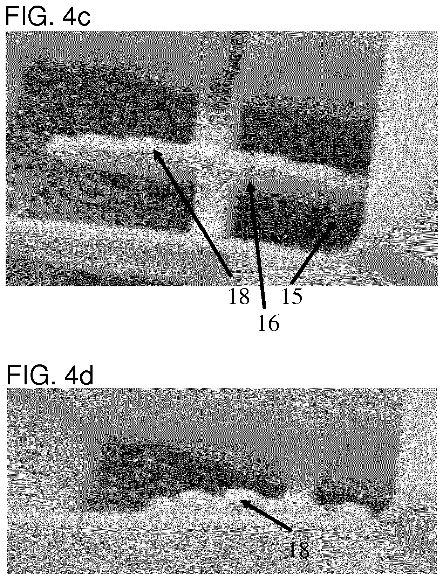

FIG. 4a shows a possible embodiment in which the dry-feed 24 is dispensed from the feed container via a spout 14.The amount of feed 24 to be dispensed is determined by the screw conveyor 15 at the bottom of the feed container 13, which is best shown in FIG. 4c. In order to prevent clogging of the feed 24, particularly ground dry-feed, an embodiment is provided, as illustrated in FIG. 4a-d, with a sprocket 16 having teeth engaged with the screw conveyor 15 for rotating the sprocket 16 by the rotation of the conveyor screw 15.The sprocket 16 is supported on a cross-shaft 17 in the feed container 13, the cross shaft 17 being held by the walls of the feed container 13. Two flexible arms 18 are fastened to the sprocket 16 by means of cross connections 19, such that the arms 18, upon rotation of the sprocket 16, shovel through the dry-feed 24 and thereby prevent clogging and which also ensures that the dry-feed 24 surrounds the screw conveyor 15 near the spout 14 in order to ensure accurate dosing without interruption during dispensing. In certain embodiments, the sprocket 16 can be taken out when there is no need for it, which is typically the case when fed with pellet feed.

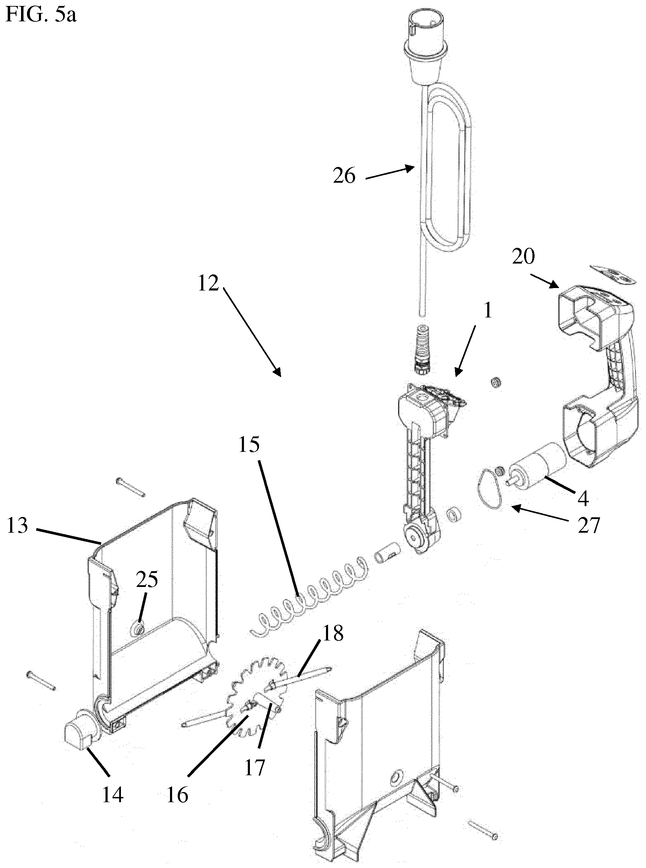

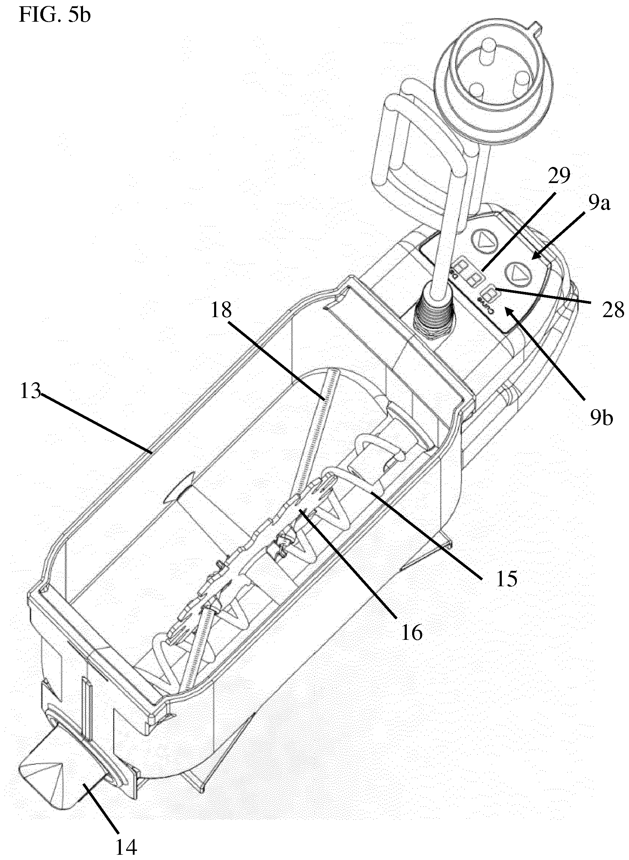

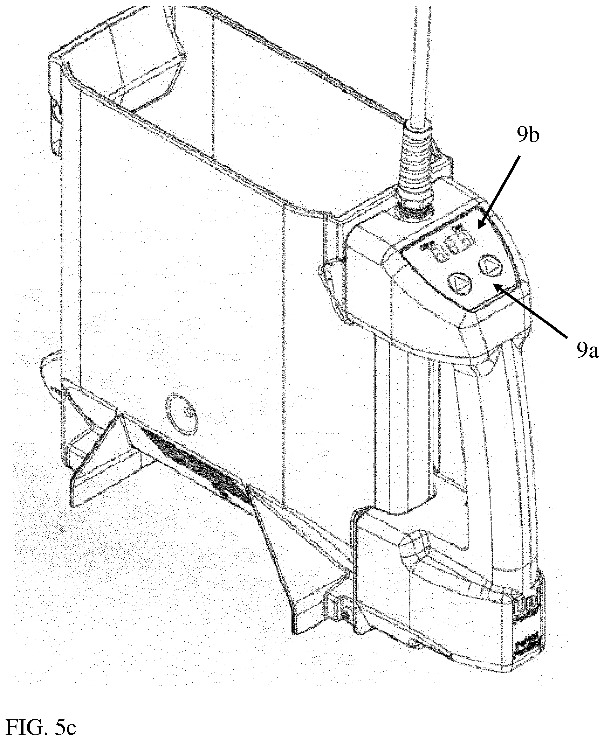

FIG. 5a, 5b and 5c show a slightly different embodiment in which there is also provided a container 13 in which the bottom has a screw conveyor 15 to transport the dry-feed, especially granulated feed, to a spout 14.Clearly seen is the sprocket 16 having teeth in engagement with the screw conveyor 15 for rotating the sprocket 16 by rotation of the screw conveyor 15. The sprocket 16 is carried on a cross shaft 17 provided in the feed container, where the cross shaft 17 is fastened to some bearings 25 in the feed container 13 walls. Two flexible arms 18 are fastened to the sprocket 16 by means of cross connections 19, such that the arms 18, upon rotation of the sprocket 16, shovel through the dry-feed 24.

It is pointed out that the sprocket can be provided with a different number of arms, for example one arm or three arms.

In some embodiments, this feeder is designed for easy manual removal of the sprocket 16 from the container. For example, the sprocket 16 is resiliently clamped between two bearings 25 and can be released from the bearings 25 by pressing the container 13 walls resiliently apart.

The drive of the conveyor screw 15 by a rotary actuator 4 is slightly different in FIG. 5a than in FIG. 1a. Further, a power cable 26 is used to supply electric current to the control module 1 and the rotary actuator 4, both being accommodated in the outer shell 20 upon assembly. There may also be provided rechargeable batteries in the feeder in order for it to function even in the event of power failure, which is important in order to ensure a continuous feeding even when there are power failures in the electricity network.

In FIG. 5b, a keypad is shown with two pushbuttons. For example, a first one of the pushbuttons is used to shift the dosing-curve vertically between levels. For example, repeated pressing of one pushbutton repeatedly increases the feeding by shifting the dosing-curve vertically among a number of levels, for example ten levels from level 0 to 9, in a cyclic manner. That is, the levels increased up to a maximum level value, for example 9, when the pushbutton is pressed repeatedly, after which a further press shifts the dosing-curve to a minimum level value, for example, level 0.

For example, the second of the two pushbuttons is configured to shift the feeding-day, which is the actual entrance day in the dosing-curve. In some cases, the feeder should not start with day one on the dosing-curve, why is advantageous to select the day from which the feed curve has to start or commence. For example, a new feeder to be used for a litter of pigs that are 15 days old should not start dispensing according to the curve from the very beginning of the curve but should start with a dispense day that corresponds to the fifteenth day in the life of the piglets.

A first part 28 of the display 9b is related to the first pushbutton and indicates the level of the dosing-curve, for example among predetermined levels expressed by the numbers 0 to 9. Another part 29 of the display 9b indicates the actual feed-day on the dosing-curve and is related to the second pushbutton.

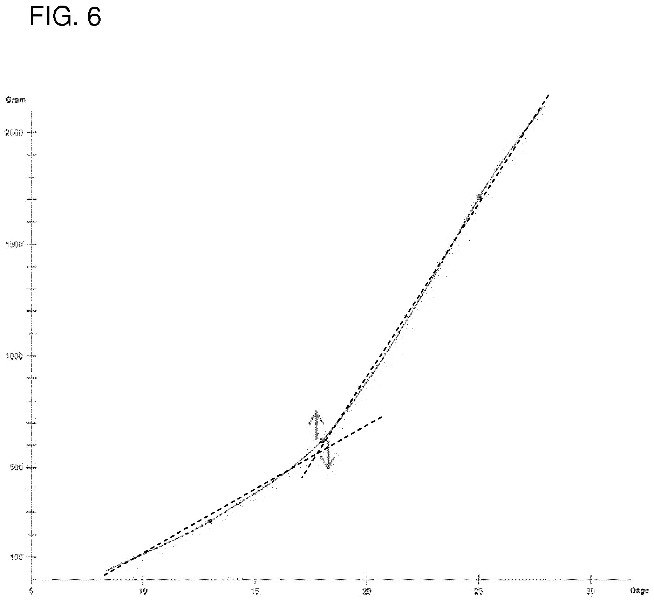

FIG. 6 shows an example of an optimized dosing-curve for piglets feeding. This dosing-curve serves as the basic curve for the feeding and would be stored in the data memory of the control module. As shown in FIG. 6, the basic curve has a first sub-period in which it is convex (upwards hollow), which means that the curve's slope is increasing, after which the curve turns to a slight concave course (downwards hollow), where the slope is decreasing.

The exact method of feeding, thus, includes increasing the daily amount of feed for a number of piglets, the increase per day rising until a time when the increase per day falls again, which in FIG. 6 is towards the end of the period.

However, the dosing-curve in FIG. 6 can be much simplified by an approximation using two linear trajectories with a first approximately linear increase in a first phase of about 10 days and a subsequent second approximately linear increase in a second phase of about 10 days It is observed from FIG. 6 that the second increase is significant higher than the first increase. The shown linear trajectories have a slope that increases by a factor of 3 around day 17 and 18. In combination, it is thus possible to provide a simplified dosing-curve with two successive phases in the period, each phase following a substantially linear trajectory where the slope of the linear trajectory, however, increases significantly in the second phase relatively to the first phase.

A programming of a dosing-curve to be stored in the database and executed by the microprocessor is relatively simple if the dosing curves are approximated by linear trajectories, especially, if the approximation is done with only two linear trajectories, as illustrated in FIG. 6.

The curve in Fig. 6 is primarily intended for piglets, but has a universal character and can therefore be used also for the rearing of other animal cubs. In this case, the values at the y-axis, however, are adapted to the size of the cubs.

By using the keypad, the feeding can be increased or decreased corresponding to a parallel shift up or down of the base curve, as indicated by the two arrows in FIG. 6. For example, two keys are used with, respectively, an upwards arrow and a downwards arrow, as exemplified above in relation to FIG. 1, or a single pushbutton is used with a cyclic change of curve, as exemplified above in connection with FIG. 6.

For example, this parallel shift can be carried out by a single press on one of the pushbuttons or by pressing repeatedly, wherein each press leads to an incremental parallel shift up or down by a fixed value as described above. For example, the curve obtained by a two-step shift-up by a fixed value can be done by two presses on one of the pushbuttons. For example, similarly, the curves obtained by downwards shift of the basic curve is obtained by one or more repeated presses on the second of the pushbuttons or by pressing the first of the pushbuttons a number of times through a cyclic sequence. As a further alternative, the first pushbutton is configured for downwards shift of the dosing-curve when exposed to a long press. If a single button is used for a cyclic shift, it will allow other functions for a further pushbutton, for example, the choice of the feed-day as described above.

As an alternative to one or two pushbuttons, there may be provided a tilt-switch in which a tilt up or down causes an increase respectively decrease of the dosing, or of the feed-day.

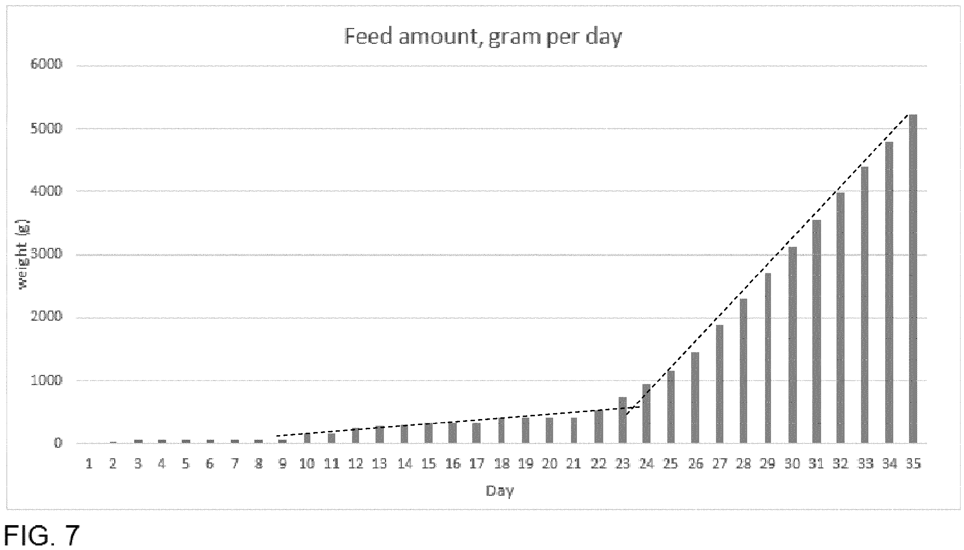

A slightly different dosing-curve is shown in FIG. 7, where the dosing-curve is presented as a histogram, seeing that the term dosing-curve is to be understood in general terms. In this case, the piglets birthday corresponds to day 1. The days numbered 2-9 correspond to an introduction period where, for instance, iron supplements are fed three times a day, but no regular food yet for the piglets. Feeding of regular feed takes place from the tenth day after birth. From that day on, the amount of regular feed is gradually increased daily. Accordingly, the dosing-curve for regular feed in FIG. 7 is the histogram-curve from day 10 to day 35.

For example, dispensing occurs 10 times a day with a feeding every two hours and a break between midnight and 6 o-clock in the morning. Also in this case, the feeding per day follows a fixed dosing-curve that dispenses daily amounts depending on the day as calculated from the day of birth of the piglets.

For example, the feeder is programmed to start with a dosing-curve in level 5, and the farmer can then adjust the curve level up or down as required by pressing one of the pushbuttons, for instance one of the two pushbuttons, as already explained above.

In comparison to the dosing-curve of FIG. 6, the histogram dosing-curve for regular feed in FIG. 7, which is the curve from day 10 to day 35, also has two phases of the dosing-curve having very different slopes for dispensing. The two phases are on either side of the feed-day 23, which is the midpoint of the actual dosing-curve. As also indicated in FIG. 7, the dosing-curve in the first phase from day 10 to day 22 has a much smaller increase than in the second phase from day 24 to day 35. The two phases have approximately the same length, unless the feeding is interrupted before days 35, which is not uncommon because the feeding period, in some cases, has to be limited to fewer days, for example 28 or 30 days. The dosing-curve, however, has in both phases a substantially linear trajectory, as indicated in FIG. 7 and similarly to the curve of FIG. 6. However, the shift in the slope for the two approximately linear trajectories is much more significant in FIG. 7 than in FIG. 6. The slope in FIG. 7 increases by more than a factor of 10, rather with a factor of 12.

### Numbering

1 Control module
2 First bevel gear wheel with horizontal bearing
2a Connection between bevel gear wheel and screw conveyor 15
3 Second bevel gear wheel with vertical bearing
4 Rotary actuator
5 Rear panel
6 Packing
7 Plain bearing
8 Pilot bearing for conveyor screw
9 Control unit
9a Keypad of control unit
9b Display of control unit
9c Electronic components of control unit
10 Mounting brackets
11 Keypad foil
12 Feeder
13 Feed container
13A Lid for feed container 13
14 Feed outlet
15 Conveyor screw
16 Sprocket engaged with the conveyor screw 15
17 Sprocket axle
18 Flexible arm
19 Cross connection between the sprocket and the flexible arm 18
20 Outer shell of the control module 1
20a Openings in the outer shell 20 for keypad 9a and display 9b
21 Bolts for mounting of the rear panel 5 onto the outer shell 20
22 Holes in the mounting bracket 10 for bolts 21
23 Support for control module 1
24 Granulated feed
25 Bearings in feed container 13 walls for the sprocket axle 17
26 Power Cable
27 O-ring for sealing
28 Display for curve level
29 Display for feed day

## Claims

1. Feeder (12) configured for periodic dispensing of dry-feed, wherein the feeder (12) comprises a feed container (13) for receiving dry-feed and a mechanical dosing device (15) which by activation is configured for dispensing the dry-feed from the feed container (13) to a feed outlet (14); wherein the feeder (12) also comprises a control module (1) comprising a microprocessor and a digital data memory with a preprogrammed dosing-sequence stored therein and being functionally connected to the dosing device (15) for periodic activation of the dosing device (15) for dispensing predetermined portions of the dry-feed according to the pre-programmed dosing-sequence stored in the digital data memory and executed by the microprocessor, wherein the dosing-sequence over a period follows a predetermined dosing-curve with dosing amounts that vary in dependence of the time of dispensing within this period; wherein the control module (1) comprises a display (9b) and a keypad (9a) electrically connected to the microprocessor, the control module (1) is provided at an outer side of the feed container (13) or on an outer side of the feed container (13) and comprises an outer shell (20) that comprises the display (9b) and the keypad (9a), **characterised in that**: the keypad (9a) comprises a pushbutton or tilt-switch for programming the microprocessor by a number of repeated presses of the pushbutton or tilts of the tilt-switch to increase or decrease the dosing amount for the predetermined dosing-curve step-wise by a predetermined value for each of the successive presses or tilts without changing the general trajectory of the dosing-curve; wherein the display (9b) is adapted to indicate this increase or decrease.

2. A Feeder according to claim 1, wherein the outer shell (20) also is housing the microprocessor, data memory, and an actuator (4) that is mechanically connected to the dosing device (15) and functionally connected to the microprocessor, wherein the microprocessor is configured to start and stop the actuator (4) according to the pre-programmed dosing-sequence.

3. A Feeder according to claim 2, wherein the dosing device (15) is a conveyor screw provided in the feed container (13), and wherein an end of the conveyor screw is mechanically connected to the actuator (4) in the outer shell (20) for driving of the conveyor screw by the actuator, and wherein the opposite end of the screw conveyor is connected to the feed outlet (14); wherein there is provided a stirring member (16, 17, 18, 19) in the feed container (13) for stirring the dry-feed, wherein the stirring member (16, 17, 18, 19) is also driven by the actuator (4).

4. A Feeder according to claim 3, wherein the stirring element (16, 17, 18, 19) comprises a sprocket (16) having teeth engaged with the screw conveyor (15) for rotation of the sprocket (16) by rotation of the screw conveyor (15), wherein a flexible arm (18) is fastened to the sprocket (16) for by rotation of the sprocket (16) to shovel through the dry-feed.

5. A Feeder according to any one of the preceding claims,wherein said feed curve is given by a relationship between an abscissa and an ordinate, wherein the abscissa is a consecutive day-numbering that is increased daily during operation, and the ordinate has a value for the amount of feed for the particular day-number; wherein the keypad (9a) includes a further pushbutton or tilt-switch for programming the microprocessor by several successive presses on this further pushbutton or tilt of the tilt-switch to increase or decrease the abscissa of the predetermined dosing-curve by one day for each of the successive presses or tilts without changing the general trajectory of the dosing-curve, and wherein the display (9b) is functionally connected to this additional pushbutton or tilt-switch and arranged to indicate the changed day-number.

6. A Feeder according to any one of the preceding claims, wherein the keypad (9a) comprises only two pushbuttons or tilt-switches or only one push button and one tilt-switch.

7. A Feeder according to any one of the preceding claims, wherein the control module (1) also comprises a wireless transmitter in electronic communication with the microprocessor and configured for receiving the dosing-sequence as digital data from a computer; wherein the microprocessor is configured for storing the received dosing-sequence in the data memory.

8. A method of programming of the microprocessor in a feeder according to any one of the preceding claims, wherein the keypad (9a) comprises a pushbutton or tilt-switch for programming the microprocessor by only a single press of the pushbutton or tilt of the tilt-switch, the programming causing increase or decrease of the dosing amount for the predetermined dosing-curve by a predetermined value without changing the general trajectory of the dosing-curve; wherein the display (9b) is configured for indicating this increase or decrease; wherein the method comprises pressing the pushbutton or tilting of the tilt-switch repeatedly a number of times, and step-wise changing the dosing-curve by a predetermined value for each of the successive presses or tilts without changing the general trajectory of the dosing-curve, and indicating a changed level of the dosing-curve after the increase or decrease in several steps by the display (9b).

9. A method according to claim 8, wherein said feed curve is given by a relationship between an abscissa, which has a consecutive day-number, and an ordinate, which has a value for the amount of feed, wherein the keypad (9a) comprises a further pushbutton or tilt-switch for by only one press of this second pushbutton or a simple tilt of the tilt-switch to program the microprocessor to increase or decrease the abscissa of the predetermined dosing-curve with one day without changing the general trajectory of the dosing-curve; wherein the method comprises pressing the pushbutton or tilting of the tilt-switch repeatedly a number of times and changing the abscissa step-wise one day by each of the repeated presses without changing the general trajectory of the dosing-curve; and indicating the changed day-number by the display (9b) after the change by the several steps.

10. A method of automatically feeding animals with a feeder (12) according to any one of claims 1-7, wherein the method includes programming the microprocessor in the control module (1) for successively dosing varying amounts of dry food over a period of several weeks and the dispensing thereof from the feeder (12); wherein the programming comprises storing the varying amounts of dry food as a dosing-sequence in the digital data memory, wherein the microprocessor is configured for controlling the mechanical dosing device (15) by activation and de-activation for dispensing dry food according to the dosing-sequence; **characterized in that** the method comprises dividing the period into a first phase and, in continuation thereof, a second phase, wherein the amount of dry-feed per day delivered from the feed station of the dosing-sequence in the first phase increases with a first increase and in the second phase with a second increase which is larger than the first increase by a specific factor.

11. A method according to claim 10, wherein the increase in the first phase and in the second phase is approximately linear with different slopes in the different phases, wherein the slope of the second phase is a specific factor larger than the slope of the first phase.

12. A method according to claim 10 or 11, wherein said specific factor is larger than 3.

13. A method according to any one of claims 10-12, wherein the first phase lasts for 10-13 days.

14. Use of a feeder according to any one of claims 1-7 or a method according to claims 8-13 for the feeding of piglets.

## Patentansprüche

1. Fütterer (12), konfiguriert zum regelmäßigen Ausgeben von Trockenfutter, wobei der Fütterer (12) einen Futterbehälter (13) zum Aufnehmen von Trockenfutter und eine mechanische Dosiervorrichtung (15) umfasst, die mittels Aktivierung zum Ausgeben des Trockenfutters von dem Futterbehälter (13) zu einem Futterauslass (14) konfiguriert ist; wobei der Fütterer (12) zudem ein Steuermodul (1) umfasst, das einen Mikroprozessor und einen digitalen Datenspeicher mit darin gespeicherter vorprogrammierter Dosierungsabfolge umfasst und funktionell mit der Dosiervorrichtung (15) zur regelmäßigen Aktivierung der Dosiervorrichtung (15) zum Ausgeben vorbestimmter Portionen des Trockenfutters gemäß der vorprogrammierten Dosierungsabfolge, die in dem digitalen Datenspeicher gespeichert ist und durch den Mikroprozessor ausgeführt wird, verbunden ist, wobei die Dosierungsabfolge über einen Zeitraum einer vorbestimmten Dosierungskurve mit Dosierungsmengen folgt, die in Abhängigkeit von der Ausgabezeit innerhalb dieses Zeitraums variieren; wobei das Steuermodul (1) eine Anzeige (9b) und eine Tastatur (9a) umfasst, die elektrisch mit dem Mikroprozessor verbunden sind, das Steuermodul (1) an einer Außenseite des Futterbehälters (13) oder auf einer Außenseite des Futterbehälters (13) bereitgestellt ist und eine Außenhülle (20) umfasst, die die Anzeige (9b) und die Tastatur (9a) umfasst, **dadurch gekennzeichnet, dass**:
die Tastatur (9a) eine Drucktaste oder einen Kippschalter zum Programmieren des Mikroprozessors durch eine Anzahl von wiederholten Druckvorgängen der Drucktaste oder Kippvorgängen des Kippschalters umfasst, um die Dosierungsmenge für die vorbestimmte Dosierungskurve schrittweise um einen vorbestimmten Wert für jeden der aufeinanderfolgenden Druck- oder Kippvorgänge zu erhöhen oder zu verringern, ohne die allgemeine Trajektorie der Dosierungskurve zu verändern; wobei die Anzeige (9b) ausgelegt ist, um diese Erhöhung oder Verringerung anzuzeigen.

2. Fütterer nach Anspruch 1, wobei die Außenhülle (20) zudem den Mikroprozessor, den Datenspeicher und einen Aktor (4) aufnimmt, der mechanisch mit der Dosiervorrichtung (15) und funktionell mit dem Mikroprozessor verbunden ist, wobei der Mikroprozessor dazu konfiguriert ist, den Aktor (4) gemäß der vorprogrammierten Dosierungsabfolge zu starten und zu stoppen.

3. Fütterer nach Anspruch 2, wobei die Dosiervorrichtung (15) eine Förderschnecke ist, die in dem Futterbehälter (13) bereitgestellt ist, und wobei ein Ende der Förderschnecke mechanisch mit dem Aktor (4) in der Außenhülle (20) verbunden ist, um die Förderschnecke durch den Aktor anzutreiben, und wobei das gegenüberliegende Ende der Förderschnecke mit dem Futterauslass (14) verbunden ist; wobei ein Rührelement (16, 17, 18, 19) in dem Futterbehälter (13) zum Rühren des Trockenfutters bereitgestellt ist, wobei das Rührelement (16, 17, 18, 19) ebenfalls durch den Aktor (4) angetrieben wird.

4. Fütterer nach Anspruch 3, wobei das Rührelement (16, 17, 18, 19) ein Zahnrad (16) umfasst, das Zähnen aufweist, die mit der Förderschnecke (15) zur Drehung des Zahnrads (16) mittels Drehung der Förderschnecke (15) in Eingriff sind, wobei ein flexibler Arm (18) an dem Zahnrad (16) zur Drehung des Zahnrads (16) befestigt ist, damit es durch das Trockenfutter schaufelt.

5. Fütterer nach einem der vorstehenden Ansprüche, wobei die Futterkurve durch ein Verhältnis zwischen einer Abszisse und einer Ordinate gegeben ist, wobei die Abszisse eine fortlaufende Tagesnummerierung ist, die täglich während des Betriebs erhöht wird, und die Ordinate einen Wert für die Futtermenge für die konkrete Tagesnummer aufweist; wobei die Tastatur (9a) eine weitere Drucktaste oder einen weiteren Kippschalter zum Programmieren des Mikroprozessors durch einige aufeinanderfolgende Druckvorgänge auf diese weitere Drucktaste oder Kippvorgang des Kippschalters beinhaltet, um die Abszisse der vorbestimmten Dosierungskurve um einen Tag für jeden der aufeinanderfolgenden Druck- oder Kippvorgänge zu erhöhen oder zu verringern, ohne die allgemeine Trajektorie der Dosierungskurve zu verändern, und wobei die Anzeige (9b) funktionell mit dieser zusätzlichen Drucktaste oder dem zusätzlichen Kippschalter verbunden und angeordnet ist, um die veränderte Tagesnummer anzuzeigen.

6. Fütterer nach einem der vorstehenden Ansprüche, wobei die Tastatur (9a) nur zwei Drucktasten oder Kippschalter oder nur eine Drucktaste und einen Kippschalter umfasst.

7. Fütterer nach einem der vorstehenden Ansprüche, wobei das Steuermodul (1) zudem einen Funksender in elektronischer Kommunikation mit dem Mikroprozessor und konfiguriert zum Empfangen der Dosierungsabfolge als digitale Daten von einem Computer umfasst; wobei der Mikroprozessor zum Speichern der empfangenen Dosierungsabfolge in dem Datenspeicher konfiguriert ist.

8. Verfahren zum Programmieren des Mikroprozessors in einem Fütterer nach einem der vorstehenden Ansprüche, wobei die Tastatur (9a) eine Drucktaste oder einen Kippschalter zum Programmieren des Mikroprozessors durch nur einen einzelnen Druckvorgang der Drucktaste oder Kippvorgang des Kippschalters umfasst, wobei die Programmierung einen Erhöhung oder Verringerung der Dosierungsmenge für die vorbestimmte Dosierungskurve um einen vorbestimmten Wert verursacht, ohne die allgemeine Trajektorie der Dosierungskurve zu verändern; wobei die Anzeige (9b) zum Anzeigen dieser Erhöhung oder Verringerung konfiguriert ist; wobei das Verfahren wiederholtes Drücken der Drucktaste oder Kippen des Kippschalters für mehrere Male und schrittweises Verändern der Dosierungskurve um einen vorbestimmten Wert für jeden der aufeinanderfolgenden Druck- oder Kippvorgänge, ohne die allgemeine Trajektorie der Dosierungskurve zu verändern, und Anzeigen eines veränderten Niveaus der Dosierungskurve nach der Erhöhung oder Verringerung in einigen Schritten durch die Anzeige (9b) umfasst.

9. Verfahren nach Anspruch 8, wobei die Futterkurve durch ein Verhältnis zwischen einer Abszisse, die eine fortlaufende Tagesnummer aufweist, und einer Ordinate, die einen Wert für die Futtermenge aufweist, gegeben ist, wobei die Tastatur (9a) eine weitere Drucktaste oder einen weiteren Kippschalter für nur einen Druckvorgang dieser zweiten Drucktaste oder einen einfachen Kippvorgang des Kippschalters umfasst, um den Mikroprozessor zu programmieren, um die Abszisse der vorbestimmten Dosierungskurve um einem Tag zu erhöhen oder zu verringern, ohne die allgemeine Trajektorie der Dosierungskurve zu verändern; wobei das Verfahren wiederholtes Drücken der Drucktaste oder Kippen des Kippschalters für mehrere Male und Verändern der Abszisse schrittweise um einen Tag durch jeden der wiederholten Druckvorgänge, ohne die allgemeine Trajektorie der Dosierungskurve zu verändern; und Anzeigen der veränderten Tagesnummer durch die Anzeige (9b) nach der Veränderung durch die einigen Schritte umfasst.

10. Verfahren zum automatischen Füttern von Tieren mit einem Fütterer (12) nach einem der Ansprüche 1-7, wobei das Verfahren Programmieren des Mikroprozessors in dem Steuermodul (1) zum aufeinanderfolgenden Dosieren veränderlicher Mengen an Trockenfutter über einen Zeitraum von einigen Wochen und das Ausgeben davon aus dem Fütterer (12) beinhaltet; wobei das Programmieren Speichern der veränderlichen Mengen an Trockenfutter als eine Dosierungsabfolge in dem digitalen Datenspeicher umfasst, wobei der Mikroprozessor zum Steuern der mechanischen Dosiervorrichtung (15) mittels Aktivierung und Deaktivierung zum Ausgeben von Trockenfutter gemäß der Dosierungsabfolge konfiguriert ist; **dadurch gekennzeichnet, dass** das Verfahren Unterteilen des Zeitraums in eine erste Phase und eine zweite Phase im Anschluss daran umfasst, wobei die von der Futterstation gelieferte Menge an Trockenfutter pro Tag der Dosierungsabfolge in der ersten Phase mit einer ersten Erhöhung und in der zweiten Phase mit einer zweiten Erhöhung steigt, die um einen bestimmten Faktor größer als die erste Erhöhung ist.

11. Verfahren nach Anspruch 10, wobei die Erhöhung in der ersten Phase und in der zweiten Phase ungefähr linear zu unterschiedlichen Neigungen in den unterschiedlichen Phasen ist, wobei die Neigung der zweiten Phase um einen bestimmten Faktor größer als die Neigung der ersten Phase ist.

12. Verfahren nach Anspruch 10 oder 11, wobei der bestimmte Faktor größer als 3 ist.

13. Verfahren nach einem der Ansprüche 10-12, wobei die erste Phase 10-13 Tage dauert.

14. Verwendung eines Fütterers nach einem der Ansprüche 1-7 oder eines Verfahrens nach Ansprüchen 8-13 zum Füttern von Ferkeln.

## Revendications

1. Dispositif d'alimentation (12) configuré pour la distribution périodique d'un aliment sec, dans lequel le dispositif d'alimentation (12) comprend un récipient d'alimentation (13) destiné à recevoir un aliment sec et un dispositif de dosage mécanique (15) qui est configuré lors d'une activation pour la distribution de l'aliment sec depuis le récipient d'alimentation (13) jusqu'à une sortie d'alimentation (14) ; dans lequel le dispositif d'alimentation (12) comprend également un module de commande (1) comprenant un microprocesseur et une mémoire de données numériques avec une séquence de dosage préprogrammée stockée dans celle-ci et connecté fonctionnellement au dispositif de dosage (15) pour l'activation périodique du dispositif de dosage (15) pour distribuer des portions prédéterminées de l'aliment sec selon la séquence de dosage préprogrammée stockée dans la mémoire de données numériques et exécutée par le microprocesseur, dans lequel la séquence de dosage sur une période suit une courbe de dosage prédéterminée avec des quantités de dosage qui varient en fonction du temps de distribution dans cette période ; dans lequel le module de commande (1) comprend un dispositif d'affichage (9b) et un clavier (9a) connectés électriquement au microprocesseur, le module de commande (1) est prévu sur un côté extérieur du récipient d'alimentation (13) ou sur un côté extérieur du récipient d'alimentation (13) et comprend une coque externe (20) qui comprend le dispositif d'affichage (9b) et le clavier (9a), **caractérisé en ce que** :
le clavier (9a) comprend un bouton-poussoir ou un commutateur d'inclinaison permettant de programmer le microprocesseur par un certain nombre de pressions répétées sur le bouton-poussoir ou d'inclinaisons du commutateur d'inclinaison pour augmenter ou diminuer la quantité de dosage pour la courbe de dosage prédéterminée par étapes d'une valeur prédéterminée pour chacune des pressions ou inclinaisons successives sans modifier la trajectoire générale de la courbe de dosage ; dans lequel le dispositif d'affichage (9b) est conçu pour indiquer cette augmentation ou cette diminution.

2. Dispositif d'alimentation selon la revendication 1, dans lequel la coque externe (20) loge également le microprocesseur, une mémoire de données et un actionneur (4) qui est connecté mécaniquement au dispositif de dosage (15) et connecté fonctionnellement au microprocesseur, dans lequel le microprocesseur est configuré pour démarrer et arrêter l'actionneur (4) conformément à la séquence de dosage préprogrammée.

3. Dispositif d'alimentation selon la revendication 2, dans lequel le dispositif de dosage (15) est une vis transporteuse prévue dans le récipient d'alimentation (13), et dans lequel une extrémité de la vis transporteuse est reliée mécaniquement à l'actionneur (4) dans la coque extérieure (20) pour entraîner la vis transporteuse par l'actionneur, et dans lequel l'extrémité opposée du transporteur à vis est reliée à la sortie d'alimentation (14) ; dans lequel est prévu un agitateur (16, 17, 18, 19) dans le récipient d'alimentation (13) pour agiter l'aliment sec, dans lequel l'agitateur (16, 17, 18, 19) est également entraîné par l'actionneur (4).

4. Dispositif d'alimentation selon la revendication 3, dans lequel l'agitateur (16, 17, 18, 19) comprend un pignon (16) ayant des dents en prise avec le transporteur à vis (15) pour la rotation du pignon (16) par rotation du transporteur à vis (15), dans lequel un bras flexible (18) est fixé au pignon (16) pour permettre la rotation du pignon (16) afin de pelleter l'aliment sec.

5. Dispositif d'alimentation selon l'une quelconque des revendications précédentes, dans lequel ladite courbe d'alimentation est donnée par une relation entre une abscisse et une ordonnée, dans lequel l'abscisse est une numérotation de jour consécutive qui est augmentée quotidiennement pendant le fonctionnement, et l'ordonnée a une valeur pour la quantité d'aliment pour le numéro de jour particulier ; dans lequel le clavier (9a) inclut un autre bouton-poussoir ou commutateur d'inclinaison permettant de programmer le microprocesseur par plusieurs pressions successives sur cet autre bouton-poussoir ou inclinaisons du commutateur d'inclinaison pour augmenter ou diminuer l'abscisse de la courbe de dosage prédéterminée d'un jour pour chacune des pressions ou inclinaisons successives sans modifier la trajectoire générale de la courbe de dosage, et dans lequel le dispositif d'affichage (9b) est connecté de manière fonctionnelle à cet autre bouton-poussoir ou cet autre commutateur d'inclinaison et est agencé pour indiquer le nombre de jours modifié.

6. Dispositif d'alimentation selon l'une quelconque des revendications précédentes, dans lequel le clavier (9a) ne comprend que deux boutons-poussoirs ou commutateurs d'inclinaison ou seulement un bouton-poussoir et un commutateur d'inclinaison.

7. Dispositif d'alimentation selon l'une quelconque des revendications précédentes, dans lequel le module de commande (1) comprend également un émetteur sans fil en communication électronique avec le microprocesseur et configuré pour recevoir la séquence de dosage sous forme de données numériques provenant d'un ordinateur ; dans lequel le microprocesseur est configuré pour stocker la séquence de dosage reçue dans la mémoire de données.

8. Procédé de programmation du microprocesseur dans un dispositif d'alimentation selon l'une quelconque des revendications précédentes, dans lequel le clavier (9a) comprend un bouton-poussoir ou un commutateur d'inclinaison permettant de programmer le microprocesseur par une simple pression sur le bouton poussoir ou une simple inclinaison du commutateur d'inclinaison, la programmation provoquant l'augmentation ou la diminution de la quantité de dosage pour la courbe de dosage prédéterminée d'une valeur prédéterminée sans modifier la trajectoire générale de la courbe de dosage ; dans lequel le dispositif d'affichage (9b) est configuré pour indiquer cette augmentation ou cette diminution ; dans lequel le procédé comprend la pression répétée du bouton-poussoir ou l'inclinaison répétée du commutateur d'inclinaison, et la modification par étapes la courbe de dosage d'une valeur prédéterminée pour chacune des pressions ou inclinaisons successives sans modifier la trajectoire générale de la courbe de dosage, et l'indication d'un changement de niveau de la courbe de dosage après l'augmentation ou la diminution en plusieurs étapes par le dispositif d'affichage (9b).

9. Procédé selon la revendication 8, dans lequel ladite courbe d'alimentation est donnée par une relation entre une abscisse, qui a un numéro de jour consécutif, et une ordonnée, qui a une valeur pour la quantité d'alimentation, dans lequel le clavier (9a) comprend un autre bouton-poussoir ou un autre commutateur d'inclinaison permettant de programmer le microprocesseur de manière, par une simple pression sur ce second bouton-poussoir ou par une simple inclinaison du commutateur d'inclinaison, à augmenter ou diminuer l'abscisse de la courbe de dosage prédéterminée d'une journée sans modifier la trajectoire générale de la courbe de dosage ; dans lequel le procédé comprend la pression sur le bouton-poussoir ou l'inclinaison du commutateur d'inclinaison un certain nombre de fois de manière répétée et la modification de l'abscisse par étapes d'un jour par chacune des pressions répétées sans modifier la trajectoire générale de la courbe de dosage ; et l'indication du numéro du jour modifié par le dispositif d'affichage (9b) après le changement par plusieurs étapes.

10. Procédé d'alimentation automatique d'animaux avec un dispositif d'alimentation (12) selon l'une quelconque des revendications 1 à 7, dans lequel le procédé inclut la programmation du microprocesseur dans le module de commande (1) pour le dosage successif de quantités variables de dosage d'aliment sec sur une période de plusieurs semaines et leur distribution à partir du dispositif d'alimentation (12) ; dans lequel la programmation comprend le stockage des quantités variables d'aliment sec sous forme d'une séquence de dosage dans la mémoire de données numériques, dans lequel le microprocesseur est configuré pour commander le dispositif de dosage mécanique (15) par activation et désactivation afin de distribuer l'aliment sec en fonction de la séquence de dosage ; **caractérisé en ce que** le procédé comprend la division de la période en une première phase et, dans le prolongement de celle-ci, une seconde phase, dans lequel la quantité d'aliment sec fournie par jour à partir de la station d'alimentation de la séquence de dosage dans la première phase augmente avec une première augmentation et, dans la seconde phase, avec une seconde augmentation qui est plus importante que la première augmentation d'un facteur spécifique.

11. Procédé selon la revendication 10, dans lequel l'augmentation dans la première phase et dans la seconde phase est approximativement linéaire avec des pentes différentes dans les différentes phases, dans lequel la pente de la seconde phase est un facteur spécifique supérieur à la pente de la première phase.

12. Procédé selon la revendication 10 ou 11, dans lequel ledit facteur spécifique est supérieur à 3.

13. Procédé selon l'une quelconque des revendications 10 à 12, dans lequel la première phase dure 10 à 13 jours.

14. Utilisation d'un dispositif d'alimentation selon l'une quelconque des revendications 1 à 7 ou procédé selon les revendications 8 à 13 pour l'alimentation de porcelets.
